# EUROPÄISCHE PATENTSCHRIFT

(11) **EP 4 083 466 B1**
(45) Veröffentlichungstag und Bekanntmachung des Hinweises auf die Patenterteilung: **17.09.2025**
(21) Anmeldenummer: 21171556.0
(22) Anmeldetag: 30.04.2021
(51) Int. Cl.: A47K 13/10, A47K 13/12, F16F 9/14

(54) **DÄMPFER FÜR EINE DREHBEWEGUNG, INSBESONDERE VON TOILETTENDECKELN ODER -SITZEN**
DAMPER FOR A ROTARY MOTION, IN PARTICULAR OF A TOILET LID OR SEAT
AMORTISSEUR POUR UN MOUVEMENT DE ROTATION, EN PARTICULIER DES COUVERCLES OU DES SIÈGES DE TOILETTES

(43) Veröffentlichungstag der Anmeldung: 02.11.2022
(73) Patentinhaber: Geberit International AG, 8645 Jona (CH)
(72) Erfinder: KOSARNIG, Rolf, 8630 Rüti (CH)
(74) Vertreter: Szynka Smorodin Patentanwälte Partnerschaft mbB

(56) Entgegenhaltungen:
- CN-A- 112 127 728
- JP-A- S5 459 572
- US-B2- 6 634 033

## Beschreibung

Die vorliegende Erfindung bezieht sich auf einen Drehdämpfer, also eine Einrichtung zur Dämpfung von Drehbewegungen um eine Drehachse. Ein solcher Dämpfer kann insbesondere eingesetzt werden zur Dämpfung der Drehbewegung von Toilettendeckeln oder Toilettensitzen, die auf einer Toilette montiert sind. Zum Beispiel kann damit ein zu heftiges Anschlagen am Ende einer Absenkbewegung vermieden werden.

Solche Dämpfer sind grundsätzlich vorbekannt und in allgemeinem Gebrauch. Sie weisen regelmäßig ein Gehäuse auf, aus dem ein zapfenartiges Teil herausragt, wobei das Gehäuse mit einem Vorrichtungsteil und der Zapfen mit einem anderen hinsichtlich der Drehbewegung zu koppeln sind. Eine Relativbewegung führt zu einer Verdrängung eines Viskosedämpfungsmediums in dem Gehäuse, was mit einem die eigentliche Dämpfungswirkung erzeugenden und viskositätsbedingten Strömungswiderstand des Dämpfungsmediums verbunden ist.

Für die beschriebene Verdrängung ist die Relativbewegung zweier Dämpferelemente verantwortlich, von denen eines mit dem Gehäuse gekoppelt (oder integriert) ist und das andere mit dem erwähnten Zapfen oder einem anderen separat vom Gehäuse greifbaren und in der Regel aus diesem herausstehenden Teil. Bei dieser Relativbewegung wird das Dämpfungsmedium durch einen Strömungsweg gedrängt und erzeugt dabei infolge seiner Viskosität einen Strömungswiderstand.

Es ist grundsätzlich vorbekannt, den Dämpfer diesbezüglich einstellen zu können. Dementsprechende Einstellelemente sind im Regelfall von außen zugänglich und weisen hierzu z. B. einen Werkzeugeingriff auf. Insbesondere sind drehbare Einstellelemente vorbekannt, mit denen ein für die Dämpfungswirkung wesentlicher Strömungsquerschnitte in dem Strömungsweg verändert werden kann.

Zum Stand der Technik wird verwiesen auf die US 6,634,033 B2 sowie die JP 540 59 572 und schließlich die CN 1 121 277 28 A, die jeweils solche Einstellelemente zeigen. Dabei liegt das zuerst genannte Dokument dem Oberbegriff des Anspruchs 1 zugrunde.

Der Erfindung liegt die Aufgabe zugrunde, einen mit einem solchen drehbaren Einstellelement versehenen Dämpfer hinsichtlich der Einstellbarkeit vorteilhaft weiterzuentwickeln.

Die Erfindung richtet sich auf einen Dämpfer für eine Drehbewegung, insbesondere von Toilettendeckeln oder -sitzen, um eine Drehachse, mit einem viskosen Dämpfungsmedium, zwei relativ zueinander beweglichen Dämpferelementen, deren Relativbewegung zu einer Verdrängung des Dämpfungsmediums führt und das Dämpfungsmedium durch einen Strömungsweg drängt, und einem drehbaren Einstellelement zum Einstellen eines Strömungsquerschnitts in dem Strömungsweg, dadurch gekennzeichnet, dass das Einstellelement eine durch seine Drehung verfahrbare und in dem Strömungsweg angeordnete Einstellöffnung aufweist, welche Einstellöffnung in zumindest einem Teil eines Verfahrweges der Drehbarkeit mit einer Abdeckkante überlappt, wobei das Ausmaß der Überlappung durch die Drehung verstellt und damit der Strömungsquerschnitt eingestellt wird.

Bevorzugte Ausgestaltungen sind Gegenstand der abhängigen Ansprüche, wobei sich die Erfindung auch auf eine vorteilhafte Verwendung und auf eine mit einem erfindungsgemäßen Dämpfer ausgestaltete Toilettengarnitur richtet.

Erfindungsgemäß ist ein drehbares Einstellelement vorgesehen, das eine durch die Drehung des Einstellelements verfahrbare Einstellöffnung aufweist. Dabei müssen der die Öffnung aufweisende Teil und das übrige Einstellelement nicht zwingend einstückig ausgestaltet sein, aber hinsichtlich der Drehbewegung gekoppelt sein. Die Einstellöffnung ist in dem Strömungsweg angeordnet und kann durch ihre Verfahrbewegung einen Strömungsquerschnitt verändern. Dazu überlappt die Einstellöffnung mit einer Abdeckkante. Die Abdeckkante, überdeckt also einstellungsabhängig einen unterschiedlich großen Anteil der Einstellöffnung und durch die Drehung wird dieser Anteil, also das Ausmaß der Überlappung, verstellt.

Zum Beispiel kann die Abdeckkante eine Begrenzungskante (oder die Kombination einer Mehrzahl Begrenzungskanten) einer weiteren Öffnung in dem Strömungsweg sein, die unmittelbar zu der Einstellöffnung benachbart ist.

Die Drehbarkeit kann dabei relativ zu dem einen Dämpferelement oder dem anderen Dämpferelement vorgesehen sein; entscheidend ist nur, dass sich die Drehbarkeit auf die Veränderung der beschriebenen Überlappung auswirkt.

Im Stand der Technik sind stattdessen Lösungen bekannt, bei denen ein drehbares Einstellelement bei seiner Drehung eine axiale Verschiebung erfährt, indem es nämlich in einem Gewinde geführt ist und wie eine Schraube verstellt wird. Dadurch wirkt sich statt der beschriebenen Einstellöffnung eine axiale Verschiebung einer Stirnfläche des Einstellelements auf einen Strömungsquerschnitt aus.

Die Erfindung erlaubt verschiedene und je nach Anwendungsfall unterschiedlich wichtige Gestaltungsmöglichkeiten. Einerseits kann die erfindungsgemäße Einstellöffnung radial von der Drehachse des Einstellelements, die in meisten Fällen mit der Drehachse des Dämpfers übereinstimmt, beabstandet werden, wodurch sich ein größerer Gestaltungsspielraum ergibt.

Ferner kann eine axiale Bewegung des Einstellelements vermieden werden, weil sie für die Einstellung nicht erforderlich ist (wenngleich sie im allgemeinsten Sinn der Erfindung möglich ist). Dann ist also die Drehung eine reine Drehung ohne axiale Komponente, also keine Schraubenbewegung. Dementsprechend verändert sich das Einstellelement auch von außen gesehen hinsichtlich seiner axialen Position nicht und bleibt z. B. hinsichtlich der Bedienung axial an der gleichen Stelle. Es tritt z. B. nicht weiter in ein Bauteil des Dämpfers, in dem es aufgenommen ist, hinein oder aus diesem heraus. Außerdem können bei einer Fehlbedienung das Herausfallen des Einstellelements und damit Undichtwerden des Dämpfers vermieden werden, wie es bei gewindegeführten Einstellelementen nach dem Stand der Technik möglich ist.

Gemäß einer bevorzugten Ausgestaltung kann die Einstellöffnung in einem Umkehrbereich des Strömungswegs angeordnet werden. Dieser Strömungsweg verbindet dabei zwei Volumina, von denen eines durch die Relativbewegung bzw. Verschiebung verkleinert und das andere vergrößert wird, wobei bei dieser Ausgestaltung der Strömungsweg einen zentrischen axialen Teil aufweist. Die Einstellöffnung liegt dann zwischen diesem axialen Teil des Strömungswegs und einem der beiden Volumina, welches radial weiter außen liegt. Das Dämpfungsmedium kann also über den axialen Teil der Einstellöffnung zugeführt werden (oder umgekehrt). Die beiden Volumina liegen vorzugsweise in axialer Hinsicht beidseits des verschobenen Dämpferelements und dementsprechend liegt eines der beiden näher an der Einstellöffnung und wird über diese mit dem axialen Strömungswegteil verbunden. Zur Veranschaulichung wird auf das Ausführungsbeispiel verwiesen.

Bei dieser Ausgestaltung erlaubt die radial aus der Achse versetzte Position der Einstellöffnung eine Nutzung der Achsposition für den axialen Teil des Strömungswegs.

In dem Strömungsweg des Dämpfungsmediums kann vorteilhafterweise ferner ein Ventilelement vorgesehen sein, um die Funktion des Dämpfers richtungsabhängig zu verändern. Dieses Ventilelement kann strömungsrichtungsabhängig bewegt werden und eine Bypassöffnung in den Strömungsweg schalten oder sperren. Die Bypassöffnung verringert den Strömungswiderstand des Strömungswegs insgesamt deutlich und verringert damit den Dämpfungsgrad. Zum Beispiel kann es gewünscht sein, einen Toilettensitz oder -deckel gegen einen relativ geringen Dämpfungswiderstand anheben zu können bei gleichzeitiger Gewährleistung einer ausreichenden Dämpfung der Absenkbewegung.

Wenn die Bypassöffnung in der einen Strömungsrichtung nicht vollständig verschlossen, sondern lediglich deutlich verengt wird, führt dies zu analogen technischen Konsequenzen und ist daher inbegriffen. Umgekehrt muss das Ventilelement in der anderen Strömungsrichtung nicht zwingend in eine genau definierte andere Position bewegt werden. Insbesondere ist ein Elastomer-Ventilelement bevorzugt, bei dem das strömende Dämpfungsmedium einen Teil des Ventilelements oder das Ventilelement insgesamt gegen eine Rückstellkraft des Elastomermaterials bewegt, sodass abhängig von der Strömungsgeschwindigkeit eine unterschiedlich starke Auslenkung des Ventilelements auftreten kann. Es geht vor allem darum, strömungsrichtungsabhängig den Strömungswiderstand an der entsprechenden Stelle deutlich zu verändern bzw. in der Sperrrichtung den Durchfluss des Dämpfungsmediums auch ganz zu unterbinden.

In einer besonders einfachen Ausgestaltung ist das Ventilelement ein Einwegeventil, das sich strömungsrichtungsabhängig öffnet oder schließt und in dem durch die Bypassöffnung führenden Anteil des Strömungswegs vorgesehen ist.

Vorteilhafterweise ist die Bypassöffnung im offenen Zustand parallel geschaltet zu der Einstellöffnung des Einstellelements. Im offenen Zustand der Bypassöffnung bzw. des durch diese führenden Anteils des Strömungswegs ist die Einstellöffnung damit weitgehend außer Funktion gesetzt, sodass die Einstellung über das Einstellelement in diesem Sinn die stärker gedämpfte Drehrichtung des Dämpfers betrifft.

Bei einer weiteren bevorzugten Ausgestaltung folgt der bereits beschriebenen Einstellöffnung eine Vorratskammer für Dämpfungsmedium nach. Mit "Nachfolgen" ist hier gemeint, dass die Vorratskammer unmittelbar an die Einstellöffnung anschließt bzw. dazwischen keine hinsichtlich des Strömungswiderstands des Dämpfungsmediums relevante Verengung existiert. Ferner nimmt dies auf diejenige Strömungsrichtung Bezug, in der die durch die Einstellöffnung einstellbare Dämpfungswirkung erfolgt (und nicht die z. B. durch die zuvor diskutierte Bypassöffnung mit einem deutlich geringeren Strömungswiderstand versehene Richtung).

Diese Vorratskammer hat die Funktion, eine gewisse Menge des Dämpfungsmediums zu bevorraten, sodass durch die Einstellöffnung in deren Dämpffunktion hindurch gezwängtes Dämpfungsmedium mit in der Vorratskammer bevorratetem Dämpfungsmedium zusammentrifft. Typischerweise zeigt nämlich das Dämpfungsmedium die Eigenschaft, nach dem durch ein entsprechendes Druckgefälle erzwungenen Durchtritt durch enge Stellen, insbesondere die Einstellöffnung, vorübergehend eine niedrigere Viskosität zu haben als zuvor. Dann könnte bei einer Bewegung über eine gewisse Strecke, insbesondere einer durch eine größere Kraft beaufschlagten Bewegung, stromabwärts von der Einstellöffnung der Strömungswiderstand dortiger Teile des Strömungswegs absinken. Die beschriebene Vorratskammer wirkt dem dadurch entgegen, dass das durch die Einstellungsöffnung hindurchgetretene Dämpfungsmedium mit anderem Dämpfungsmedium vermischt wird.

Insbesondere kann die Vorratskammer eine z. B. trichterartige Verbreiterung eines ungefähr radial verlaufenden Kanals im Strömungsweg sein, wie das Ausführungsbeispiel zeigt.

Die Einstellöffnung selbst kann an einer an diesen Kanal, insbesondere dessen Verbreiterung, anschließenden Vertiefung in einer Außenfläche desjenigen Dämpferbauteils vorliegen, das den Kanal enthält (oder auch eines unmittelbar benachbarten Bauteils). Vorzugsweise handelt es sich um eine Vertiefung einer zylindrischen Außenfläche eines Dämpferbauteils. Das Ausführungsbeispiel veranschaulicht auch dies. Eine solche Vertiefung lässt sich gut in kleinen Dimensionen herstellen und hat den Vorteil, dass sich durch Nachbearbeitung z. B. eines Spritzgusswerkzeugs oder Austauschen eines kleinen Teils eines mehrteiligen Spritzgusswerkzeugs die Maße einer solchen Vertiefung nach einer Erprobung oder zur Anpassung an eine neue Einsatzsituation geringfügig verändern lassen. Damit kann produktionsseitig zusätzlich zu der erfindungsgemäßen Einstellmöglichkeit eine Anpassung der Dämpfungseigenschaften (jedenfalls in der hier relevanten Richtung) vorgenommen werden.

Bei einer weiteren Ausgestaltung dieser Vertiefung hat diese eine sich mindestens in einer Richtung verjüngende Form, und zwar von dem Kanal ausgehend schmaler werdend. Die Richtung, in der der Begriff "schmal" gilt, ist dabei senkrecht zu der Richtung der Relativbewegung der Dämpferelemente (und natürlich senkrecht zur radialen Richtung). Von dem Kanal ausgehend in Richtung der Relativbewegung nimmt die Schmalheit zu. Vorzugsweise wird die Vertiefung dabei außerdem flacher (dies bezogen auf die radiale Richtung).

Die Überlappung mit der Abdeckkante nimmt (bei Drehung des Einstellelements) in der Relativbewegungsrichtung der Dämpferelemente zu, sodass also durch die zunehmende Überlappung nurmehr schmalere und flachere Teile der Vertiefung frei bleiben. Dementsprechend wird durch die Form der Vertiefung bedingt trotz vorzugsweise gleichmäßiger Steigung der Helixform der Abdeckkante gewissermaßen ein nichtlineares Ansprechen der Einstellmöglichkeit erzielt. Insbesondere lässt sich das Ansprechverhalten in dem zuvor beschriebenen Sinn durch eine Veränderung der Vertiefung auch noch anpassen.

Vorzugsweise weist der Dämpfer ein erstes Dämpferelement auf, welches einen ersten Teil in dem Gehäuse und einen mit dem ersten Teil im Rotationssinn fest verbundenen zweiten Teil außerhalb des Gehäuses aufweist und mit dem ersten und dem zweiten Teil relativ zu dem Gehäuse um die Drehachse drehbar ist, sowie ein zweites Dämpferelement, welches bezüglich Drehungen um die Drehachse fest mit dem Gehäuse gekoppelt und mit dem ersten Dämpferelement so gekoppelt ist, dass eine Drehung des ersten Dämpferelements relativ zu dem Gehäuse zu einer axialen Verschiebung des zweiten Dämpferelements relativ zu dem ersten Dämpferelement und einer Verdrängung des Dämpfungsmediums entlang dem Strömungsweg in dem Gehäuse durch das zweite Dämpferelement führt, wobei das zweite Dämpferelement mittels eines Gewindeeingriffs mit dem ersten Dämpferelement gekoppelt und zumindest insoweit radial in dem ersten Dämpferelement aufgenommen ist, dass der Gewindeeingriff in dem ersten Dämpferelement vorliegt, und dass der Gewindeeingriff und die dadurch bewirkte Verdrängung des Dämpfungsmediums durch das zweite Dämpferelement bidirektional wirken.

Bei dieser Dämpfervariante wird also aus der Drehung der beiden Dämpferelemente relativ zueinander eine axiale Verschiebung des zweiten Dämpferelements relativ zu dem ersten erzeugt. Dabei erfolgt dies über einen Gewindeeingriff zwischen den beiden Dämpferelementen, und zwar sozusagen radial (in Bezug zu der Drehachse) zwischen diesen beiden Dämpferelementen. In anderen Worten soll das zweite Dämpferelement zumindest insoweit radial in dem ersten Dämpferelement aufgenommen sein (sodass diese also, radial betrachtet, überlappen), dass der Gewindeeingriff in diesem aufgenommenen Bereich und damit in dem ersten Dämpferelement (also im Bereich der Überlappung) vorliegt.

Es geht hier also nicht um die Wechselwirkung zwischen axial benachbarten helixförmigen Stirnflächen, sondern um einen im radialen Sinn äußeren Bereich des zweiten Dämpferelements und einen inneren Bereich des ersten Dämpferelements, die in Gewindeeingriff miteinander stehen.

In dieser Form kann eine robuste und konstruktiv nicht allzu komplizierte mechanische Lösung für die Erzeugung der Verdrängung des Dämpfungsmediums realisiert werden.

Insbesondere kann ein solcher Gewindeeingriff in zwei Richtungen zu einer axialen Verschiebung führen, während es bei den vorbekannten axialen Stirnseiten und deren Helixformen jeweils nur zu Kräften in eine Richtung kommen kann. Wenn dabei eine Wechselwirkung in zwei Richtungen gewünscht ist, müssen die Strukturen gewissermaßen verdoppelt werden. Im Stand der Technik gibt es stattdessen auch Lösungen, bei denen eine zusätzliche Feder vorgesehen ist und damit gewissermaßen die Kraft in der zweiten Richtung als Vorspannung vorgibt. Demgegenüber ist die Erfindung insoweit einfacher, als der Gewindeeingriff an sich bidirektional wirkt.

Bevorzugterweise ist das zweite Dämpferelement jedenfalls hinsichtlich des Gewindeeingriffs in dem ersten Dämpferelement aufgenommen, sodass also das erste Dämpferelement in diesem Bereich radial außerhalb des zweiten liegt. Da das erste Dämpferelement über den zweiten Teil außerhalb des Dämpfergehäuses verfügt (gewöhnlich ein zylindrischer Zapfen mit Abflachungen an zueinander entgegengesetzten Seiten), werden also die Kräfte über das radial äußere Teil in den Gewindeeingriff eingeleitet. Damit sind hier die Hebellängen relativ groß und ist das erste Dämpferelement im Hinblick auf die Übertragung dieser Kräfte besonders robust.

Grundsätzlich kann der Gewindeeingriff schon dadurch erfolgen, dass nur an einem der beiden Dämpferelemente ein Gewinde, also ein Satz aus mindestens zwei helixförmigen Flächen, vorgesehen ist. Bei dem anderen Dämpferelement kann dann z. B. nur ein einfacher Vorsprung (mit z. B. runder Grundfläche) oder eine Ausnehmung vorgesehen sein, wobei der Vorsprung zwischen die beiden helixförmigen Flächen des anderen Dämpfungselements bzw. die beiden helixförmigen Flächen in die Ausnehmung eingreifen können.

Bevorzugt ist allerdings, dass beide Dämpferelemente jeweils zwei helixförmige Flächen aufweisen und es insoweit einen wechselseitigen Eingriff von Gewinden ineinander gibt.

Dabei müssen allerdings die Gewindelängen auf beiden Seiten nicht die gleichen sein und kann es beispielsweise bei einem der Dämpferelemente nur einen kurzen Vorsprung mit allerdings zwei helixförmigen Flächen an seinen Seiten geben, während eine Rille als das Gegenstück des anderen Dämpfungselements in Umfangsrichtung viel länger ausgebildet ist.

Außerdem müssen die beiden helixförmigen Flächen eines Dämpferelements nicht zwingend verschieden sein, sie können also durch den Verlauf einmal um den Umfang miteinander verbunden sein. **In** anderen Worten bezieht sich die Zahl 2 auf die Betrachtung an einer bestimmten Umfangsstelle.

Die helixförmigen Flächen, also Gewinde, an beiden Dämpferelementen sorgen für eine Verteilung der Kräfte über größere Flächen und damit eine robustere Lösung.

Vorzugsweise ist das zweite Dämpferelement mindestens bei einem Teil der durch die axiale Verschiebung auftretenden Positionen vollständig radial in dem ersten Dämpferelement aufgenommen. Dann gilt diese Aufnahme also nicht nur für einen axialen Abschnitt des zweiten Dämpferelements. In dieser Form kann eine besonders kompakte Konstruktion erreicht werden.

Weiterhin ist bevorzugt, dass es nicht etwa zusätzlich zu dem beschriebenen Gewindeeingriff noch eine weitere Wechselwirkung zwischen helixförmigen Formflächen an axialen Stirnseiten des ersten und zweiten Dämpferelements gibt. Vorzugsweise beschränkt sich also die mechanische Wechselwirkung zwischen den beiden Dämpferelementen auf den beschriebenen Gewindeeingriff, wobei dieser natürlich mehrfach vorliegen kann.

Vorzugsweise erstrecken sich die durch die helixförmigen Flächen gebildeten Gewindeabschnitte über einen nicht zu kleinen Drehwinkel (in Bezug auf die Drehachse), und zwar vorzugsweise von mindestens 50°. Damit wird eine verbesserte Stabilität und insgesamt eine robuste Ausführung des Dämpfers erreicht. Bevorzugte Untergrenzen sind ferner 60°, 70° und sogar 80°.

Diese Winkelerstreckung muss dabei nicht für die Gewindeabschnitte beider Dämpferelemente gleich sein. Beispielsweise erstrecken sich die Gewindeabschnitte des inneren zweiten Dämpferelements bei dem weiter unten beschriebenen Ausführungsbeispiel über gut 90°, aber diejenigen des äußeren ersten Dämpferelements über deutlich mehr als 200°, weil sie die Gesamtdrehbewegung des Dämpfers abdecken und zusätzlich in allen Positionen mit den inneren Gewindeabschnitten vollständig oder jedenfalls weitgehend überlappen sollen. Das bedeutet im Fall des Ausführungsbeispiels einen Gesamtdrehwinkel von 120° zuzüglich gut 90° für das zweite Dämpferelement und damit gut 210°. In diesem Sinn beziehen sich die obigen Mindestangaben auf die jeweilig kürzeren Gewindeabschnitte der Dämpferelemente.

Eine weitere oder alternative bevorzugte Steuerungsmöglichkeit des erfindungsgemäßen Dämpfers ist nicht richtungsabhängig, sondern drehwinkelabhängig, betrifft also einen Teil des Gesamtdrehwegs des Dämpfers. In einem Endbereich dieses Gesamtdrehwegs soll die Dämpfungswirkung dementsprechend verstärkt werden, und zwar indem eine weitere Öffnung in dem Strömungsweg verengt wird und damit zu der Dämpfungswirkung der Einstellöffnung als weiterer maßgeblicher Strömungswiderstand hinzutritt.

Dies wird vorteilhafterweise dadurch realisiert, dass das zweite Dämpferelement im Rahmen seiner axialen Verschiebebewegung in einem Endbereich dieser Bewegung eine Durchtrittsöffnung des Dämpfungsmediums durch zunehmende Überlappung verengt oder möglicherweise auch ganz verschließt. In letztgenanntem Fall könnte dies das Dämpfungsmedium durch einen parallel geschalteten Strömungsweganteil mit entsprechend hohem Strömungswiderstand zwingen.

Jedenfalls kann in solcher Weise z. B. dafür gesorgt werden, dass bei einer an sich eher dämpfungsarmen oder dämpfungsfreien Anhebebewegung eines Toilettendeckels oder -sitzes in der Schlussphase kurz vor dem Anschlagen eine verstärkte oder zunehmende Dämpfung erfolgt. In diesem Fall würde also diese zweite Steuerungsmöglichkeit zu der richtungsabhängigen und zuvor beschriebenen hinzutreten.

Die weiter oben erläuterte Durchtrittsöffnung kann sich bei einer vorteilhaften Ausgestaltung an den bereits zuvor erwähnten axialen Teil des Strömungswegs des Dämpfungsmediums anschließen. Sie liegt damit in Bezug auf diesen axialen Teil des Strömungswegs gewissermaßen entgegengesetzt zu der Einstellöffnung (ist dabei aber durchaus nicht symmetrisch zu dieser). Das Ausführungsbeispiel veranschaulicht diesen Aspekt.

Es könnte z. B. die Endphase einer Schließbewegung stärker gedämpft werden, um einerseits ein besonders sanftes Anschlagen in der Endposition der Schließbewegung zu erreichen, andererseits die Schließbewegung an sich damit nicht allzu sehr zu verlangsamen. Dementsprechend gibt es dann eine entsprechende Durchtrittsöffnung (im Ausführungsbeispiel zwei) im anderen Endbereich der Bewegung des zweiten Dämpferelements. Diese Durchtrittsöffnung verringert also die Dämpfung in der Anfangsphase der Schließbewegung ganz erheblich, wird dann aber in der Endphase geschlossen, sodass die eigentliche Dämpfung durch die Einstellöffnung zum Tragen kommt. Die obige Grundidee einer Durchtrittsöffnung, die in einer Endphase einer Bewegung des zweiten Dämpferelements von diesem abgedeckt wird, lässt sich dementsprechend auch doppelt ausführen.

Die erfindungsgemäße Einstellmöglichkeit ist baulich besonders flexibel, sie kann zudem sehr sensibel realisiert werden (insbesondere durch die erwähnte helixförmige Gestalt der Abdeckkante). Bei einer bevorzugten Nutzung dieses Aspekts der Erfindung wird eine gewisse Zahl vorzugsweise baugleiche Dämpfer unter Nutzung der Einstellmöglichkeit an individuelle Situation angepasst. Insbesondere betrifft dies unterschiedliche Massen von Toilettensitzen oder -deckeln (oder sonstwie in ihrer Bewegung gedämpften Teilen). Es kann also mit einem oder einer kleinen Zahl Bautypen des Dämpfers eine größere Zahl unterschiedlicher solcher Massen sinnvoll abgedeckt werden, indem die Einstellmöglichkeit zur Individualisierung genutzt wird.

Im Besonderen betrifft dies eine Mehrzahl baugleicher Dämpfer mit gleichem Dämpfungsmedium, z. B. gleichem Fetttyp. Konventionellerweise wird nämlich zwischen unterschiedlichen Dämpfungsmedien unterschieden, um auf unterschiedliche Massen der zu dämpfenden Teile Rücksicht zu nehmen. Es ist aber viel einfacher, eine kleine Zahl Dämpfertypen oder auch nur einen einzigen Dämpfertyp mit einer kleinen Zahl unterschiedlicher Dämpfungsmedien-Typen oder sogar nur einem einzigen Typ Dämpfungsmedium zu befüllen und nur die Einstellmöglichkeit zur Anpassung zu nutzen.

Die Erfindung richtet sich schließlich auch auf eine Toilettengarnitur mit zumindest einem erfindungsgemäßen Dämpfer. Eine Toilettengarnitur bezeichnet dabei mindestens einen Toilettendeckel oder einen Toilettensitz, vorzugsweise beide in Kombination, zur Montage (oder montiert) auf einer Toilette. Dabei findet ein erfindungsgemäßer Dämpfer Einsatz zum Abdämpfen der Drehbewegungen der Garniturteile, wobei vorzugsweise für den Toilettensitz und den Toilettendeckel je ein Dämpfer vorgesehen ist.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- Figur 1: eine perspektivische Ansicht einer mit einer erfindungsgemäßen Toilettengarnitur ausgestatteten Toilette, wobei ein Toilettendeckel in vertikaler und zusätzlich halb abgesenkter Position dargestellt ist;
- Figur 2: eine explosionsartige Darstellung eines erfindungsgemäßen Dämpfers in der Toilettengarnitur aus Figur 1, wobei die Einzelteile entlang der Drehachse auseinandergezogen sind;
- Figur 3: eine entlang der Drehachse geschnittene und gleichzeitig perspektivische Ansicht des wesentlichen Teils des Drehdämpfers aus Figur 2;
- Figur 4: einen Ausschnitt aus der Darstellung in Figur 3 vergrößert;
- Figur 5: eine Figur 3 entsprechende Darstellung, jedoch in Seitenansicht senkrecht zur Schnittebene und zur Drehachse;
- Figuren: 6, 7 und 8 Ansichten analog zu Figur 5, jedoch mit veränderten Positionen der Bauteile;
- Figur 9: eine Darstellung analog zu Figur 3, aber mit den Bauteilpositionen gemäß Figur 8;
- Figur 10: eine vergrößerte Darstellung des Einstellelements 12 aus Figur 2 mit etwas veränderter Drehposition gegenüber Figur 2 und
- Figur 11: eine ebenfalls vergrößerte Darstellung des Achsteils 7 aus Figur 2.

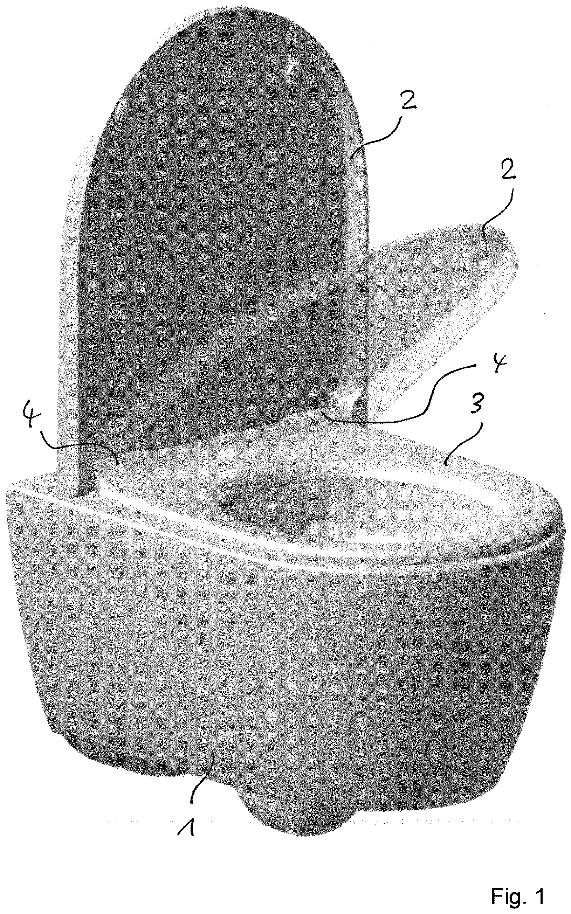

Figur 1 zeigt eine perspektivische Darstellung einer Toilette von vorn links oben. Dabei ist auf einen Toilettenkörper 1 eine Toilettengarnitur montiert, die einen Toilettendeckel 2 und einen Toilettensitz 3 aufweist, die jeweils um eine hinten querliegende Drehachse auf- und zuklappbar sind. Zur Veranschaulichung ist der Toilettendeckel 2 neben der aufrechten Position noch einmal in halb abgesenkter Lage und dabei halbtransparent angedeutet.

Die Toilettengarnitur ist in leicht verdickt erscheinenden Bereichen 4 des Toilettensitzes 3 mit zwei erfindungsgemäßen Dämpfern ausgestattet, auf die anhand der folgenden Figuren näher eingegangen wird und die zum Dämpfen der Drehbewegung des Toilettendeckels 2 und des Toilettensitzes 3 dienen. Dabei ist durch entsprechende drehbare bzw. drehverriegelte Führung/Verbindung dafür Sorge getragen, dass der eine Drehdämpfer nur die Drehbewegung des Toilettendeckels 2 dämpft und gegenüber dem Toilettensitz 3 drehbeweglich ist und der andere Drehdämpfer umgekehrt.

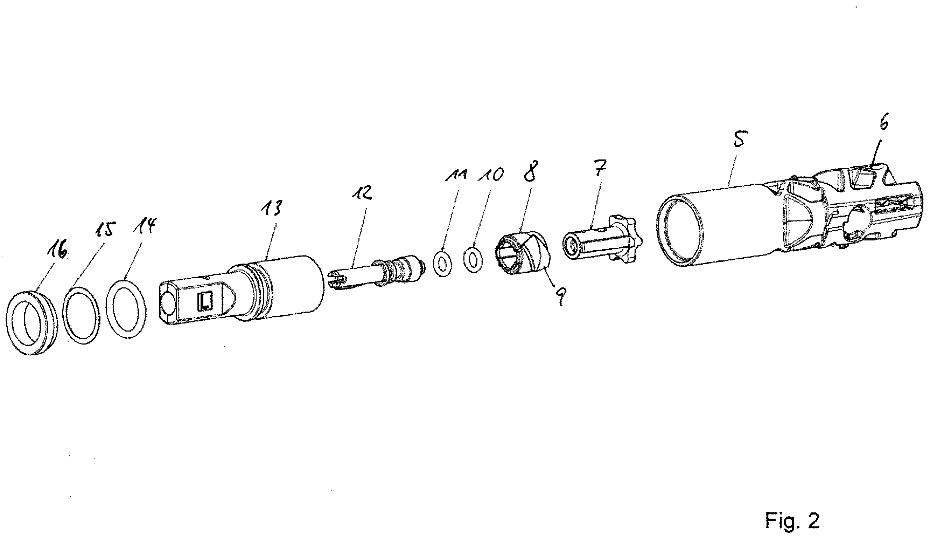

In Figur 2 sieht man einen der Dämpfer mit einer Reihe einzelner Bauteile entlang der Drehachse, wobei hier auf die linke der beiden Positionen 4 in Figur 1 abgestellt wird. Ganz rechts ist ein Gehäuse 5 des Dämpfers zu sehen, das zur linken Seite offen ist und darin einen im Wesentlichen zylindrischen Hohlraum zur Aufnahme der übrigen Teile bietet.

Der ebenfalls dargestellte rechte Teil des Dämpfergehäuses 5 dient zur Befestigung auf einem vertikalen Montagedorn, der auf dem Toilettenkörper 1 aus Figur 1 in an sich konventioneller Weise befestigt ist und das in Figur 2 mit 6 bezeichnete vertikale Loch durchsetzt. Im Übrigen wird zur Illustration verwiesen auf die frühere Anmeldung EP 20 152 653.0 der vorliegenden Anmelderin, was die Details dieser Befestigung angeht. Diese sind für die vorliegende Erfindung nicht wesentlich. **In** der Reihenfolge von rechts nach links sieht man im Übrigen ein Achsteil 7, dessen rechtes Ende eine sternähnliche Scheibe mit abgerundeten Spitzen zu einer drehverriegelten formschlüssigen Montage in einer entsprechenden Ausnehmung in der nicht sichtbaren stirnseitigen Endfläche des Hohlraums in dem Gehäuse 5 aufweist. Außerdem hat das Achsteil 7 zwei drehachsenparallele äußere Längsrippen, von denen eine dargestellt ist und die zum formschlüssigen Eingriff (hinsichtlich Drehung) in entsprechende Rillen des links daneben dargestellten Elements 8 dienen. Dieses ist das sogenannte zweite Dämpfungselement 8 und hat ausweislich der Figur einen äußeren Gewindeabschnitt 9, ein weiterer ist in Figur 2 nicht zu sehen und liegt hinter dem Element 8.

Weiter links gibt es zwei Elastomer-O-Ringe 10 und 11, auf die noch näher eingegangen wird, sowie ein hülsenstiftartiges Einstellelement 12.

Darauf folgt das sogenannte erste Dämpferelement 13, das gemäß Figur 2 einen rechten zylindrischen ersten Teil zur Aufnahme in dem Gehäuse 5 und einen linken zweiten Teil aufweist, die einstückig miteinander ausgeführt sind. Der zweite Teil des ersten Dämpferelements dient zur Drehmomentübertragung auf das von dem Dämpfer gedämpfte Garniturteil 2 oder 3, wozu die beiden seitlichen Abflachungen dienen. Insoweit ist der Dämpfer ähnlich zu konventionellen Dämpfern aufgebaut.

Noch weiter links erkennt man eine Dichtung 14, eine weitere Scheibe 15 und einen Verschlussdeckel 16.

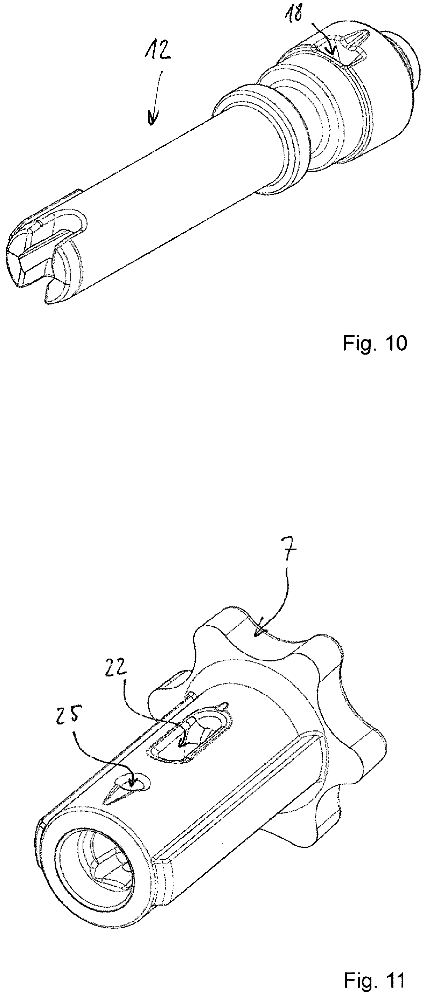

Die Teile 12 und 7 zeigen die Figuren 10 und 11 einzeln und vergrößert.

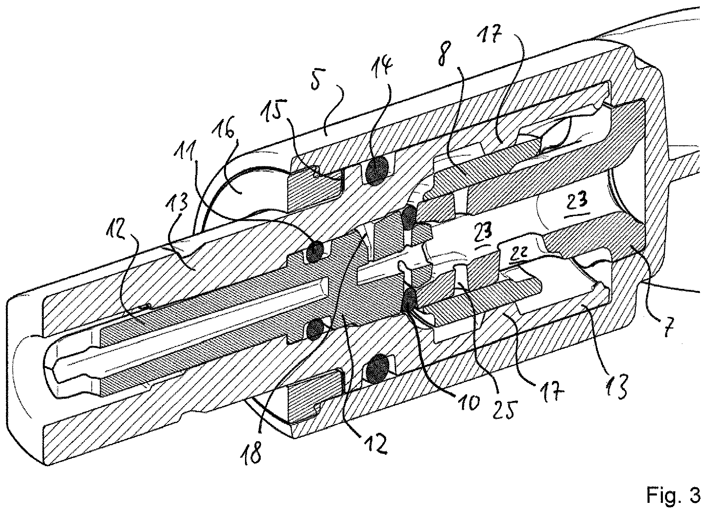

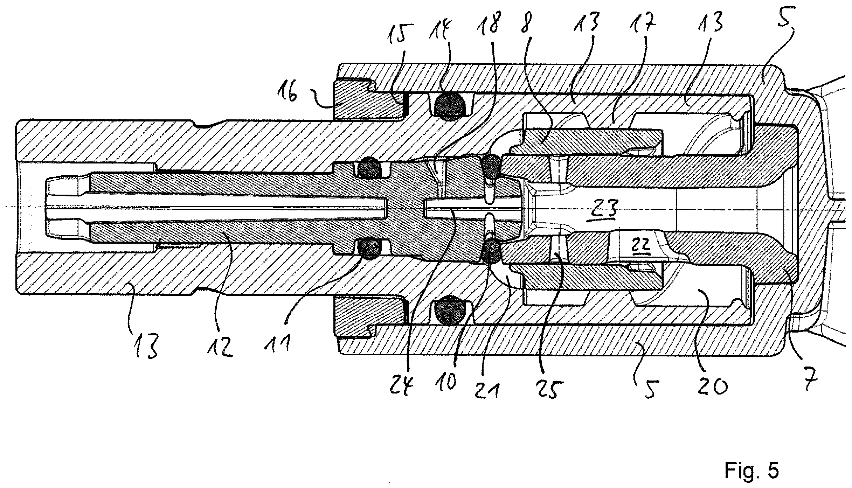

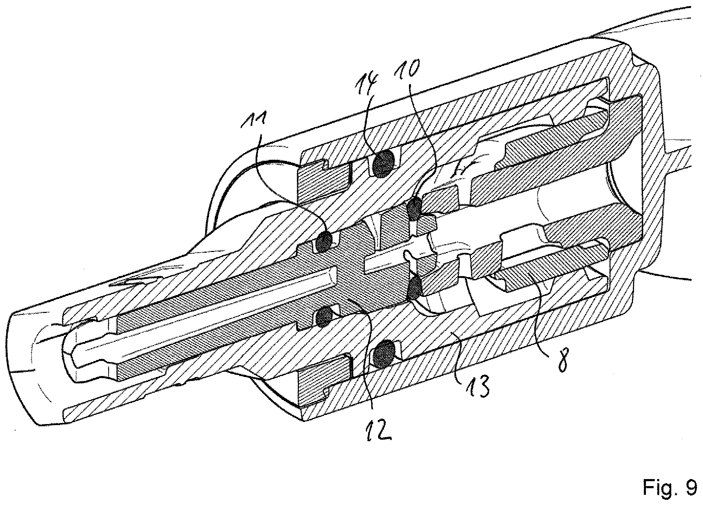

**In** den Figuren 3 und 4-9 sind diese Elemente in zusammengebautem Zustand dargestellt, wobei nur der rechte Teil des Dämpfergehäuses 5 weggelassen ist. Dabei sind die Figuren 3 und 9 einerseits in einer die Drehachse enthaltenden und in Bezug auf Figur 2 vertikalen Ebene geschnitten, andererseits perspektivisch und damit vergleichbar mit Figur 2. Die Figuren 5-8 sind in der gleichen Schnittebene geschnitten, aber in senkrechter Draufsicht auf die Schnittebene dargestellt, wobei diese Figuren 5-8 im Vergleich miteinander verschiedene Positionen einerseits des ersten Dämpfungselements 13 und des zweiten Dämpferelements 8 und andererseits des Einstellelements 12 zeigen. Hinsichtlich dieser Positionen entsprechen sich die Figuren 3 und 5 einerseits sowie 8 und 9 andererseits.

Zunächst wird das Wechselspiel zwischen dem ersten Dämpferelement 13, dem zweiten Dämpferelement 8 und dem Achsteil 7 erläutert. **In** den Figuren ist das Gehäuse 5 hinsichtlich der Drehung stationär (so wie auch auf dem Toilettenkörper 1), was wegen der bereits beschriebenen Drehverriegelung durch den Formschlusseingriff auch für das Achsteil 7 gilt. Wegen des ebenfalls bereits beschriebenen Eingriffs von dessen Rippen in die Rillen des zweiten Dämpferelements 8 ist auch das zweite Dämpferelement 8 hinsichtlich der Drehung stationär und lediglich axial verschiebbar. Drehbar wiederum ist das erste Dämpferelement 13.

Der äußere Gewindeabschnitt 9 des zweiten Dämpferelements 8 greift ein in ein Innengewinde in dem ersten Dämpferelement 13, und zwar in dessen ersten Teil. Der entsprechend nach innen vorstehende Gewindeabschnitt ist in den Figuren mit 17 bezeichnet, wobei wegen der Schnittebene der Gewindeabschnitt 9 aus Figur 2 in den Figuren 3 bis 9 nicht zu erkennen ist (er liegt nämlich hinter bzw. vor der Schnittebene). Durch diese Wechselwirkung wird eine Drehbewegung des ersten Dämpferelements 13 in eine axiale Schiebebewegung des zweiten Dämpferelements 8 übersetzt, was sich aus dem Vergleich der Figuren 5-8 (bzw. 3 und 9) ablesen lässt. In der Reihenfolge der Figurennummern handelt sich um eine Anhebebewegung eines Garniturteils, wobei sich das zweite Dämpferelement 8 von links nach rechts bewegt und ein in den Figuren gut erkennbares Volumen 20 axial rechts davon vergrößert und ein anderes Volumen 21 axial links davon verkleinert. In an sich bekannter Weise sind diese Hohlräume mit einem Dämpfungsmedium (einem Spezialfett) hoher Viskosität gefüllt, das dementsprechend aus dem rechten Hohlraum verdrängt wird und über einen Strömungsweg zu dem linken Hohlraum gezwängt wird.

Dabei ist das zweite Dämpferelement 8 gemäß den Figuren vollständig radial innerhalb des ersten Dämpferelements 13, und zwar innerhalb von dessen erstem Teil, aufgenommen. Man erkennt außerdem, dass die Drehmomenteinleitung von dem zweiten Teil des ersten Dämpferelements 13 (in den Figuren links) zu dem ersten Teil (in den Figuren rechts) und von diesem ersten Teil des ersten Dämpferelements 13 zu dem zweiten Dämpferelement 8 (also radial nach innen) bei jeweils relativ großen Radien stattfindet, also unter Berücksichtigung der Hebelwirkung mit begrenzten Kräften bzw. stabilen Strukturen.

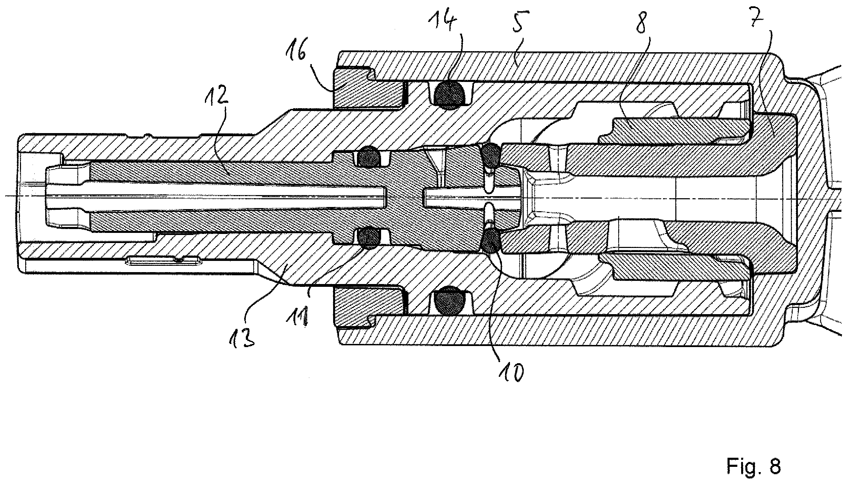

Man erkennt außerdem, z. B. in den Figuren 3 und 5, dass das erste Dämpferelement mit seinem Innengewinde z. B. in Figur 5 auch noch einmal rechts unten in dem ersten Dämpferelement zu sehen ist oder in Figur 8 noch einmal links oben, und daher das äußere Gewindeelement 9 des zweiten Dämpferelements 8 beidseits mit entsprechenden Helixflächen umgreift. Insoweit ist der Gewindeeingriff bidirektional.

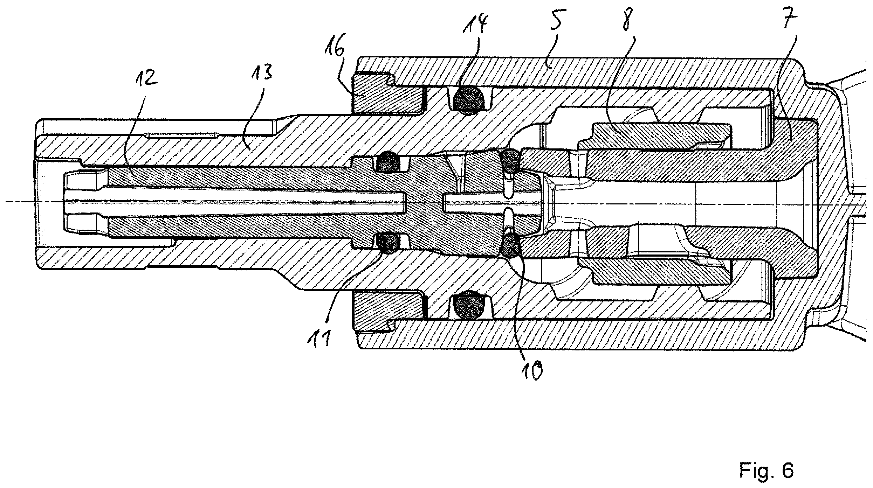

Bei der in den Figuren dargestellten Bewegung wird zunächst, also in dem Stadium von Figur 5 zu Figur 6, das Dämpfungsmedium von dem rechten Volumen 20 ausgehend durch die mit 22 bezeichnete radiale Durchtrittsöffnung in einen zentrischen und axialen Teil 23 des Strömungswegs, nämlich mittig in dem Achsteil 7, gepresst. Von dort fließt es axial weiter nach links und dann einerseits in einen zentralen Kanalabschnitt 24 am rechten Ende des Einstellelements 12 und von dieser nach etwa einem Drittel von deren Länge radial nach außen in Richtung zu dem Elastomer-O-Ring 10.

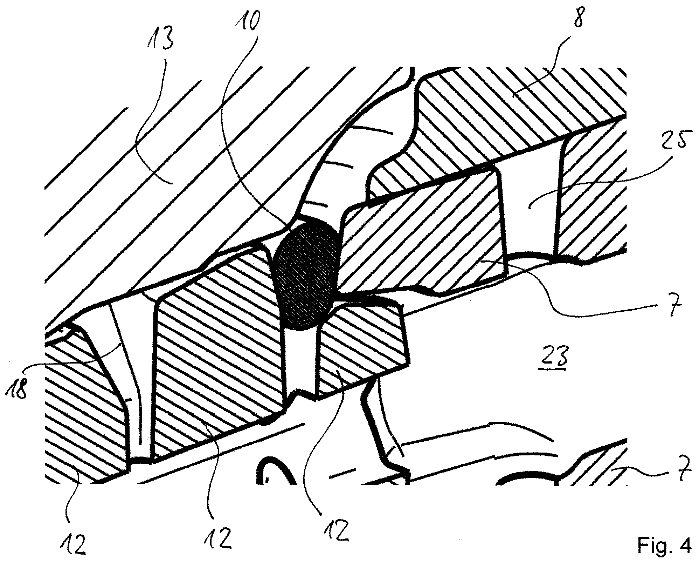

Dessen Lage ist in Figur 4 vergrößert als Ausschnitt dargestellt, wobei die Figuren eine entgegen dem hier beschriebenen Betriebszustand geschlossene Position zeigen. Der O-Ring 10 ist nämlich ein Ventilelement ähnlich einem Einwegeventil und kann durch die gerade beschriebene Strömung radial nach außen etwas verformt werden. Er sitzt in einer etwas V-förmigen Aufnahme und ist weich genug, sodass das Dämpfungsmedium ihn nach außen anheben und sich damit einen ausreichenden Strömungsquerschnitt verschaffen kann.

Ergänzend hinzu kommt ein weiterer Durchtritt für das Strömungsmedium zwischen dem rechten Ende des Einstellelements 12 und dem Innenrand des linken Endes des Achsteils 7, der ebenfalls zu dem Ventilelement bzw. O-Ring 10 führt und in gleicher Weise durch ein Verformen dieses Ventilelements 10 strömungstechnisch verbunden wird mit dem Volumen 21 radial weiter außen. Dabei handelt sich um das Volumen 21 links von dem zweiten Dämpferelement 8.

Der ebenfalls noch existierende Weg durch ein längeres Stück des Kanalabschnitts 24 hindurch nach links und dann radial nach oben spielt bei dieser Bewegungsrichtung keine wesentliche Rolle, weil die Strömungsquerschnitte dort zu klein sind, und wird weiter unten noch näher beschrieben. Bei der umgekehrten Bewegungsrichtung verschließt nämlich das Ventilelement 10 den gerade erläuterten Weg nach radial außen, weil es in die in den Figuren dargestellte Lage bzw., je nach Druck, auch noch weiter nach innen gepresst wird. Insoweit sitzt also das Ventilelement 10 in einer zuvor in der Beschreibung sogenannten Bypassöffnung.

Bei dieser Gelegenheit sei kurz angemerkt, dass die beiden weiteren O- bzw. Dichtungsringe 11 und 14 an sich konventionellen Dichtungsaufgaben dienen, nämlich einerseits zwischen dem ersten Dämpferelement 13 und dem Gehäuse 5 und andererseits zwischen ersterem und dem Einstellelement 12, vergleiche die Figuren.

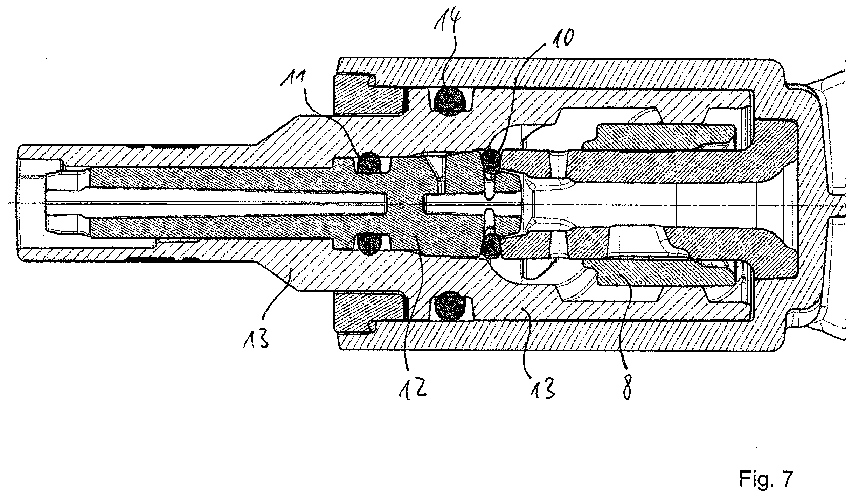

Der Vergleich der Figuren 5-7 zeigt, dass sich das zweite Dämpferelement 8 zunehmend über die Durchtrittsöffnung 22 schiebt und der verfügbare Strömungsquerschnitt für das Dämpfungsmedium von Figur 5 zu Figur 6 bereits erheblich eingeschränkt worden ist und von Figur 6 zu Figur 7 noch stärker eingeschränkt wird. In dem Zustand gemäß Figur 8 ist der Strömungsquerschnitt am kleinsten, wobei hier auch das Ende der Drehbewegungsstrecke erreicht ist.

Dieser Zusammenhang führt dazu, dass die Bewegung des Garniturteils 2 oder 3 in ihrer Schlussphase zunehmend gedämpft wird. Der Benutzer kann also den Toilettensitz 3 oder den Toilettendeckel 2 ohne großen Widerstand aus der horizontalen Position nach hinten kippen und am Ende loslassen, wobei dieser dann gebremst wird, um das Anschlagen möglichst sanft zu gestalten.

In diesem Zusammenhang wird auch auf Figur 11 und die weiter unten folgende kurze Erläuterung dazu verwiesen, gemäß der sich an die Öffnung 22 nach rechts eine kleine Vertiefung anschließt, die in Figur 5-8 nicht gut zu erkennen ist.

Im vorliegenden Fall beträgt übrigens die maximale Gesamterstreckung der Drehbewegung in dem Dämpfer etwa 120°. Diese setzen sich zusammen aus 90° für die Bewegung aus der Horizontalen in die Vertikale, weitere typische 10° für eine Überkippung des Garniturteils nach hinten in eine stabile Lage (z. B. Anlage gegen die Wand bzw. des Sitzes gegen den Deckel) zuzüglich an beiden Enden 10° Puffer.

Der umgekehrte Weg kann anhand derselben Figuren erläutert werden, nur in absteigender Reihenfolge ihrer Nummerierung. Die Bewegung des zweiten Dämpferelements 8 verdrängt nun Dämpfungsmedium in dem Volumen 21 und zwängt dieses über einen Strömungsweg in Richtung zu dem Volumen 20. Nach einiger Strecke der Drehbewegung werden dabei gemäß Figur 6 die Durchtrittsöffnungen 25 zunehmend von dem zweiten Dämpfungselement 8 abgedeckt und schließlich gemäß Figur 5 gesperrt.

Wie bereits erwähnt, sperrt dabei der durch das Dämpfungsmedium nach innen gedrückte Elastomer-O-Ring 10 als Ventilelement auch die Bypassöffnung, sodass das Dämpfungsmedium daran vorbei axial weiter nach links fließen muss, wobei der obere Bereich der Schnittdarstellungen zu beachten ist.

Hier gibt es einen über einen gewissen Drehwinkel erstreckten Raum infolge einer kleinen Kante 26 an der im Übrigen zylindrischen Innenfläche des ersten Dämpferelements. Gemäß den Figuren 8 und 9 befindet sich dieser Raum hinsichtlich der axialen Richtung praktisch vollständig über einer kleinen und nach links in ihrer Tiefe zunehmenden Vertiefung 27 in der Außenfläche des rechtesten Bereichs des Einstellelements 12. Durch diesen Spalt wird das Dämpfungsmedium in eine trichterartige Verbreiterung 28 in dem Einstellelement 12 gedrückt, von der aus das Dämpfungsmedium radial nach innen in den bereits früher beschriebenen Kanalabschnitt 24 fließt.

Von diesem Kanalabschnitt 24 aus strömt das Dämpfungsmedium dann in den axialen Teil 23 des Strömungswegs innerhalb des Achsteils 7. Aus dem zentralen Strömungswegteil 23 in dem Achsteil 7 kann das Strömungsmedium mit umgekehrter Strömungsrichtung, aber im Übrigen wie zuvor beschrieben zwischen dem zweiten Dämpferelement 8 und dem Achsteil 7 hindurchtreten, nachdem es die Durchtrittsöffnung 22 passiert hat, wobei die entsprechende Dämpfung dort mit der Bewegung des zweiten Dämpferelements 8 nach links immer schwächer wird.

Diese Bewegungsrichtung entspricht einer Absenkbewegung und in der Schlussphase ist diese stärker gedämpft. **In** diesem Zusammenhang ist auch zu berücksichtigen, dass die Wirksamkeit der Gewichtskraft bei der Absenkbewegung zunimmt. Wegen des Gewichts der Garniturteile ist dabei die Einstellbarkeit (vgl. unten) besonders relevant.

Bei der Anhebebewegung wird vor allem der letzte Teil stark gedämpft, wie gerade beschrieben, um das Anschlagen insbesondere des Toilettendeckels 2 an der Wand oder einem Spülkasten möglichst sanft zu gestalten. Hier ist dann nämlich auch kein Elastomerpuffer mehr vorgesehen, wie ihn ausweislich Figur 1 der Toilettendeckel 2 zum Anschlag auf dem Toilettensitz 3 am Ende der Absenkbewegung trägt (und analog der Toilettensitz 3 an seiner Unterseite zum Anschlag auf den Toilettenkörper 1).

Bei der obigen Erläuterung wurde entgegen den Abbildungen 3-9 eine Konstanz der Verhältnisse zwischen dem ersten Dämpferelement 13 und dem Einstellelement 12 vorausgesetzt, was dem tatsächlichen Betrieb auch entspricht. Das Einstellelement 12 ist nämlich durch einen in Figur 2 gut erkennbaren stirnseitigen Eingriff für ein Werkzeug und eine entsprechende Öffnung in der Stirnseite des ersten Dämpferelements 13 relativ zu diesem drehbar. Diese Drehbarkeit ist durch die Anlageflächen dazwischen und vor allem den Dichtungsring 11 etwas schwergängig, sodass ohne Werkzeugeingriff keine Verstellung erfolgt.

Im Vergleich der Figuren 3-9, insbesondere 5-8, ist aber das Einstellelement 12 relativ zu dem ersten Dämpferelement 13 in verschiedenen Positionen gezeigt. Das ergibt sich einfach daraus, dass das Einstellelement 12 in den Figuren immer in der gleichen Schnittebene dargestellt ist und die Elemente 5-8 auch, wohingegen das erste Dämpferelement 13 gemäß den obigen Schilderungen gedreht wird.

Vergleicht man die relative Positionierung der Kante 26 links am Ende des Raums relativ zu dem Einstellelement 12 und insbesondere der Vertiefung 27 darin zwischen den Figuren 5-8, so erkennt man, dass diese Kante 26 von Figur 5 zu Figur 8 schrittweise nach links bzw. umgekehrt wandert. Dementsprechend kann also mit einer analogen Drehung des Einstellelements 12 relativ zu dem ersten Dämpferelement 13 die axiale Überlappung zwischen dem Raum und der Vertiefung 27 verstellt werden zwischen praktisch vollständig in Figur 8 und sehr gering in Figur 5. Dementsprechend verändert sich der Strömungswiderstand dieser Stelle, was bei der Absenkbewegung in deren Schlussphase entscheidend wird. Dann ist nämlich im Unterschied zur Anhebebewegung das Ventil in Form des Ventilkörpers 10 in seinem Sitz geschlossen und muss das Dämpfungsmedium damit durch diese Engstelle passieren.

Hierbei ist das Einstellelement 12 ausschließlich drehbar, also nicht wie bei einer Schraubenbewegung gleichzeitig axial veränderlich. Insbesondere ist es verliersicher aus dem beschriebenen Grund und infolge seiner aus den Figuren erkennbaren Steckmontage von innen.

Die Einstellöffnung wiederum ist ersichtlich die durch die Vertiefung 27 gebildete Öffnung in der ansonsten zylindrischen Außenfläche in diesem rechten Abschnitt des Einstellelements 12. Sie überlappt drehwinkelabhängig mehr oder weniger mit der Stufe am linken Ende des Raums 26, die dementsprechend eine helixförmige Abdeckkante bildet.

Schließlich weist das Einstellelement 12 in Form der trichterförmigen Verbreiterung 18 des radial nach innen führenden Kanals darunter eine Vorratskammer für Dämpfungsmedium auf, die die eingangs beschriebenen vorteilhaften Wirkungen hat und (bei dem hinsichtlich der einstellbaren Dämpfungswirkung relevanten Bewegungssinn) der Einstellöffnung unmittelbar nachfolgt.

Die Vertiefung 27 erkennt man besonders deutlich in der Figur 10 rechts oben, in der das Einstellelement 12 isoliert dargestellt ist. Figur 11 mit einem isoliert dargestellten Achsteil 7 zeigt, dass es ähnliche Vertiefungen im Anschluss an die Durchtrittsöffnungen 22 und 25 gibt. Auch dort dienen sie der Verfeinerung der Einstellungsmöglichkeiten bei schon stark verringertem Strömungsquerschnitt.

Die erfindungsgemäße Einstellbarkeit der Dämpfung ist nicht nur besonders einfach und robust sowie sicher gelöst. Sie kann zusätzlich auch besonders genau und über einen breiten Bereich eingestellt werden. Erfindungsgemäß kann damit eine weitreichende Anpassung an unterschiedliche Dämpfungsaufgaben, z. B. unterschiedliche Gewichte der Garniturteile 2 und 3, erfolgen, wobei vorteilhafterweise eine kleinere Zahl unterschiedlicher Dämpfungsmedien oder sogar ein und dasselbe Dämpfungsmedium Verwendung finden können.

In diesem Zusammenhang gibt es auch produktionsseitig Anpassungsmöglichkeiten, nämlich durch kleine Eingriffe zur Veränderung der Form, insbesondere axiale Länge und radiale Tiefe, der verschiedenen Vertiefungen. Zum Beispiel können hier kleine Nachbearbeitungen an Spritzgusswerkzeugen oder anderen Teilen oder der Austausch entsprechender Teile von Spritzgusswerkzeugen benutzt werden.

## Patentansprüche

1. Dämpfer für eine Drehbewegung, insbesondere von Toilettendeckeln (2) oder -sitzen (3), um eine Drehachse, mit
einem viskosen Dämpfungsmedium,
zwei relativ zueinander beweglichen Dämpferelementen (8, 13),
deren Relativbewegung zu einer Verdrängung des Dämpfungsmediums führt und das Dämpfungsmedium durch einen Strömungsweg drängt,
und einem drehbaren Einstellelement (12) zum Einstellen eines Strömungsquerschnitts in dem Strömungsweg,
**dadurch gekennzeichnet, dass** das Einstellelement (12) eine durch seine Drehung verfahrbare und in dem Strömungsweg angeordnete Einstellöffnung aufweist,
welche Einstellöffnung in zumindest einem Teil eines Verfahrweges der Drehbarkeit mit einer Abdeckkante (26) überlappt, wobei das Ausmaß der Überlappung durch die Drehung verstellt und damit der Strömungsquerschnitt eingestellt wird.

2. Dämpfer nach Anspruch 1, bei dem die Drehung des Einstellelements (12) keine axiale Komponente aufweist

3. Dämpfer nach Anspruch 1 oder 2, bei dem die Abdeckkante (26) zumindest abschnittsweise eine Helixform aufweist.

4. Dämpfer nach einem der vorstehenden Ansprüche, bei dem die Einstellöffnung in einem Bereich des Strömungswegs des Dämpfungsmediums zwischen einem durch die Verschiebung eines (8) der Dämpferelemente veränderten Volumen (21) und einem zentrischen axialen Teil (23) des Strömungswegs zwischen diesem Volumen (21) und einem gegenläufig zu diesem Volumen (21) durch die Verschiebung des einen Dämpferelements (8) veränderten Volumen (20) ist, wobei die beiden veränderten Volumina (20, 21) beidseits des einen Dämpferelements (8) liegen und von dem Dämpfungsmedium eingenommen werden.

5. Dämpfer nach einem der vorstehenden Ansprüche mit einem in einem Strömungsweg des Dämpfungsmediums vorgesehenen Ventilelement (10), vorzugsweise einem Elastomer-Ventilelement, das strömungsrichtungsabhängig von dem Dämpfungsmedium bewegt werden kann und damit strömungsrichtungsabhängig eine zur Verringerung des Gesamtströmungswiderstands des Dämpfungsmediums vorgesehene Bypassöffnung in einer der Strömungsrichtungen des Dämpfungsmediums mehr und in der anderen Strömungsrichtung weniger freigibt, wobei die Bypassöffnung hinsichtlich der Strömung des Dämpfungsmediums zu der verfahrbaren Öffnung des Einstellelements (12) vorzugsweise parallel geschaltet ist.

6. Dämpfer nach einem der vorstehenden Ansprüche, bei dem der Einstellöffnung eine Vorratskammer (18) für das Dämpfungsmedium nachfolgt, welche Vorratskammer vorzugsweise bezüglich des Dämpferbauteils, in dem sie vorgesehen ist, nach radial außen offen ist.

7. Dämpfer nach einem der vorstehenden Ansprüche, bei dem die Einstellöffnung an einer an einen nach radial innen führenden Kanal des Strömungswegs anschließenden und diesen Kanal senkrecht zu einer radialen Richtung verbreiternde Vertiefung (27) ist.

8. Dämpfer nach Anspruch 7, bei dem die Einstellöffnung in der Richtung der Relativbewegungen von dem Kanal ausgehend in einer Richtung senkrecht dazu schmaler, vorzugsweise außerdem flacher, wird und die Überlappung mit der Abdeckkante (26) bei der Drehung des Einstellelements (12) in der Richtung der Relativbewegung zunimmt.

9. Dämpfer nach einem der vorstehenden Ansprüche, bei dem ein erstes (13) der Dämpferelemente (8, 13) einen ersten Teil in einem Gehäuse (5) und einen zweiten Teil außerhalb des Gehäuses (5) aufweist und mit dem ersten und dem zweiten Teil relativ zu dem Gehäuse (5) um die Drehachse drehbar ist,
ein zweites (8) der Dämpferelemente (8, 13) bezüglich Drehungen um die Drehachse fest mit dem Gehäuse (5) gekoppelt und mit dem ersten Dämpferelement (13) mittels eines Gewindeeingriffs so gekoppelt ist,
dass eine Drehung des ersten Dämpferelements (13) relativ zu dem Gehäuse (5) zu einer axialen Verschiebung des zweiten Dämpferelements (8) relativ zu dem ersten Dämpferelement (13) und der Verdrängung des Dämpfungsmediums in dem Gehäuse (5) durch das zweite Dämpferelement (8) führt,
wobei vorzugsweise ein für den Gewindeeingriff vorgesehenes Formelement (9) des zweiten Dämpferelements (8) und ein für den Gewindeeingriff vorgesehenes Formelement des ersten Dämpferelements (13) jeweils Gewindeabschnitte sind, die miteinander in Eingriff stehen.

10. Dämpfer nach Anspruch 9, bei dem das zweite Dämpferelement (8) zumindest insoweit radial in dem ersten Dämpferelement (13) aufgenommen ist, dass der Gewindeeingriff in dem ersten Dämpferelement (13) vorliegt, wobei vorzugsweise das zweite Dämpferelement (8) zumindest bei einem Teil seiner hinsichtlich seiner axialen Verschiebung möglichen Positionen vollständig radial in dem ersten Dämpferelement (13) aufgenommen ist, und dass der Gewindeeingriff und die dadurch bewirkte Verdrängung des Dämpfungsmediums durch das zweite Dämpferelement (8) bidirektional wirken.

11. Dämpfer nach Anspruch 9 oder 10, bei dem das zweite Dämpferelement (8) in einem Endbereich seiner axialen Verschiebung eine radiale Durchtrittsöffnung (22, 25) für das Dämpfungsmedium durch Überlappung mit der Durchtrittsöffnung (22, 25) verengt oder verschließt und damit für eine stärkere Dämpfung in diesem Endbereich sorgt.

12. Dämpfer nach Anspruch 11, bei dem das zweite Dämpferelement (8) in einem weiteren Endbereich seiner axialen Verschiebung eine weitere radiale Durchtrittsöffnung (25, 22) für das Dämpfungsmedium durch Überlappung mit der weiteren Durchtrittsöffnung (25, 22) verengt oder verschließt und damit für eine stärkere Dämpfung in diesem weiteren Endbereich sorgt.

13. Dämpfer nach Anspruch 4 und Anspruch 11, optional auch Anspruch 12, bei dem die zumindest eine radiale Durchtrittsöffnung (22, 25) an den zentrischen Teil (23) des Strömungswegs angrenzt.

14. Verwendung einer Mehrzahl Dämpfer nach einem der vorstehenden Ansprüche, bei welcher die Dämpfer aus der Mehrzahl mit demselben Typ Dämpfungsmedium befüllt sind, für hinsichtlich der zu dämpfenden Kräfte unterschiedliche Einsatzzwecke, insbesondere für unterschiedlich schwere Toilettendeckel (2) oder -sitze (3).

15. Toilettengarnitur mit einem Toilettendeckel (2) und/oder einem Toilettensitz (3) zur Montage auf einer Toilette (1) und mit mindestens einem Dämpfer nach einem der Ansprüche 1 bis 13.

## Claims

1. Damper for a rotational movement, in particular of toilet lids (2) or toilet seats (3), about an axis of rotation, with
a viscous damping medium,
two damper elements (8, 13) which are movable relative to each other,
the relative movement of which leads to a displacement of the damping medium and forces the damping medium through a flow path,
and a rotatable adjusting element (12) for adjusting a flow cross-section in the flow path,
**characterized in that** the adjustment element (12) has an adjustment opening which can be moved by rotation of the adjustment element (12) and is arranged in the flow path,
which adjustment opening overlaps with a covering edge (26) in at least part of a movement path of the rotatability, wherein the extent of the overlap is adjusted by the rotation and thus the flow cross-section is adjusted.

2. Damper according to claim 1, in which the rotation of the adjustment element (12) has no axial component.

3. Damper according to claim 1 or 2, in which the covering edge (26) has a helix shape at least in sections.

4. Damper according to one of the preceding claims, in which the adjustment opening is in a region of the flow path of the damping medium between a volume (21) changed by the displacement of one (8) of the damper elements and a centric axial part (23) of the flow path between this volume (21) and a volume (20) changed in the opposite direction to this volume (21) by the displacement of the one damper element (8), wherein the two changed volumes (20, 21) lie on both sides of the one damper element (8) and are occupied by the damping medium.

5. Damper according to one of the preceding claims, having a valve element (10) provided in a flow path of the damping medium, preferably an elastomer valve element, which can be moved by the damping medium dependent on the flow direction and thus, dependent on the flow direction, releases a bypass opening provided for reducing the total flow resistance of the damping medium more in one of the flow directions of the damping medium and less in the other flow direction, wherein the bypass opening is preferably connected in parallel with respect to the flow of the damping medium to the movable opening of the adjustment element (12).

6. Damper according to one of the preceding claims, in which the adjustment opening is followed by a storage chamber (18) for the damping medium, which storage chamber is preferably open radially outwardly with respect to the damper component in which it is provided.

7. Damper according to one of the preceding claims, in which the adjustment opening is at a depression (27) adjoining a radially inwardly leading channel of the flow path and widening this channel perpendicularly to a radial direction.

8. Damper according to claim 7, in which the adjustment opening in the direction of the relative movements starting from the channel becomes narrower in a direction perpendicular thereto, preferably also flatter, and the overlap with the covering edge (26) increases during the rotation of the adjustment element (12) in the direction of the relative movement.

9. Damper according to one of the preceding claims, in which a first (13) of the damper elements (8, 13) has a first part in a housing (5) and a second part outside the housing (5) and is rotatable with the first and the second part relative to the housing (5) about the axis of rotation,
a second (8) of the damper elements (8, 13) is fixedly coupled to the housing (5) with respect to rotations about the axis of rotation and is coupled to the first damper element (13) by means of a threaded engagement,
such that a rotation of the first damper element (13) relative to the housing (5) leads to an axial displacement of the second damper element (8) relative to the first damper element (13) and to the displacement of the damping medium in the housing (5) by the second damper element (8),
wherein preferably a shaped element (9) of the second damper element (8) provided for the threaded engagement and a shaped element of the first damper element (13) provided for the threaded engagement are in each case threaded sections which are in engagement with one another.

10. Damper according to claim 9, in which the second damper element (8) is received radially in the first damper element (13) at least to the extent that the threaded engagement is present in the first damper element (13), wherein preferably the second damper element (8) is received completely radially in the first damper element (13) at least in a part of its positions possible with respect to its axial displacement, and such that the threaded engagement and the displacement of the damping medium caused thereby act bidirectionally by the second damper element (8).

11. Damper according to claim 9 or 10, in which the second damper element (8) in an end region of its axial displacement narrows or closes a radial passage opening (22, 25) for the damping medium by overlap with the passage opening (22, 25) and thus ensures a stronger damping in this end region.

12. Damper according to claim 11, in which the second damper element (8) in a further end region of its axial displacement narrows or closes a further radial passage opening (25, 22) for the damping medium by overlap with the further passage opening (25, 22) and thus ensures a stronger damping in this further end region.

13. Damper according to claim 4 and claim 11, optionally also claim 12, in which the at least one radial passage opening (22, 25) adjoins the centric part (23) of the flow path.

14. Use of a plurality of dampers according to one of the preceding claims, in which the dampers of the plurality are filled with the same type of damping medium, for different application purposes with respect to the forces to be damped, in particular for toilet lids (2) or toilet seats (3) of different weight.

15. Toilet set with a toilet lid (2) and/or a toilet seat (3) for mounting on a toilet (1) and with at least one damper according to one of claims 1 to 13.

## Revendications

1. Amortisseur pour un mouvement de rotation, en particulier de couvercles de toilettes (2) ou de sièges de toilettes (3), autour d'un axe de rotation, comprenant
un milieu d'amortissement visqueux,
deux éléments amortisseurs (8, 13) mobiles l'un par rapport à l'autre,
dont le mouvement relatif conduit à un refoulement du milieu d'amortissement et pousse le milieu d'amortissement à travers un trajet d'écoulement,
et un élément de réglage rotatif (12) pour le réglage d'une section transversale d'écoulement dans le trajet d'écoulement,
**caractérisé en ce que** l'élément de réglage (12) présente une ouverture de réglage pouvant être déplacée par sa rotation et disposée dans le trajet d'écoulement,
laquelle ouverture de réglage chevauche dans au moins une partie d'un trajet de déplacement de la possibilité de rotation avec une arête de recouvrement (26), l'étendue du chevauchement étant réglée par la rotation et ainsi la section transversale d'écoulement étant réglée.

2. Amortisseur selon la revendication 1, dans lequel la rotation de l'élément de réglage (12) ne présente pas de composante axiale.

3. Amortisseur selon la revendication 1 ou 2, dans lequel l'arête de recouvrement (26) présente au moins par sections une forme hélicoïdale.

4. Amortisseur selon l'une quelconque des revendications précédentes, dans lequel l'ouverture de réglage se trouve dans une région du trajet d'écoulement du milieu d'amortissement entre un volume (21) modifié par le déplacement de l'un (8) des éléments amortisseurs et une partie axiale centrale (23) du trajet d'écoulement entre ce volume (21) et un volume (20) modifié dans le sens opposé à ce volume (21) par le déplacement de l'un des éléments amortisseurs (8), les deux volumes modifiés (20, 21) se trouvant de part et d'autre de l'un des éléments amortisseurs (8) et étant occupés par le milieu d'amortissement.

5. Amortisseur selon l'une quelconque des revendications précédentes, comprenant un élément de soupape (10) prévu dans un trajet d'écoulement du milieu d'amortissement, de préférence un élément de soupape élastomère, qui peut être déplacé en fonction de la direction d'écoulement par le milieu d'amortissement et libère ainsi en fonction de la direction d'écoulement une ouverture de dérivation prévue pour réduire la résistance à l'écoulement totale du milieu d'amortissement plus dans l'une des directions d'écoulement du milieu d'amortissement et moins dans l'autre direction d'écoulement, l'ouverture de dérivation étant de préférence montée en parallèle par rapport à l'écoulement du milieu d'amortissement vers l'ouverture mobile de l'élément de réglage (12).

6. Amortisseur selon l'une quelconque des revendications précédentes, dans lequel l'ouverture de réglage est suivie d'une chambre de réserve (18) pour le milieu d'amortissement, laquelle chambre de réserve est de préférence ouverte radialement vers l'extérieur par rapport au composant amortisseur dans lequel elle est prévue.

7. Amortisseur selon l'une quelconque des revendications précédentes, dans lequel l'ouverture de réglage est au niveau d'un renfoncement (27) se raccordant à un canal menant radialement vers l'intérieur du trajet d'écoulement et élargissant ce canal perpendiculairement à une direction radiale.

8. Amortisseur selon la revendication 7, dans lequel l'ouverture de réglage dans la direction des mouvements relatifs à partir du canal devient plus étroite dans une direction perpendiculaire à celui-ci, de préférence également plus plate, et le chevauchement avec l'arête de recouvrement (26) augmente lors de la rotation de l'élément de réglage (12) dans la direction du mouvement relatif.

9. Amortisseur selon l'une quelconque des revendications précédentes, dans lequel un premier (13) des éléments amortisseurs (8, 13) présente une première partie dans un boîtier (5) et une deuxième partie à l'extérieur du boîtier (5) et peut tourner avec la première et la deuxième partie par rapport au boîtier (5) autour de l'axe de rotation,
un deuxième (8) des éléments amortisseurs (8, 13) est couplé fixement par rapport à des rotations autour de l'axe de rotation au boîtier (5) et est couplé au premier élément amortisseur (13) au moyen d'un engagement fileté de telle sorte
qu'une rotation du premier élément amortisseur (13) par rapport au boîtier (5) conduit à un déplacement axial du deuxième élément amortisseur (8) par rapport au premier élément amortisseur (13) et au refoulement du milieu d'amortissement dans le boîtier (5) par le deuxième élément amortisseur (8), de préférence un élément de forme (9) prévu pour l'engagement fileté du deuxième élément amortisseur (8) et un élément de forme prévu pour l'engagement fileté du premier élément amortisseur (13) étant à chaque fois des sections filetées qui sont en engagement l'une avec l'autre.

10. Amortisseur selon la revendication 9, dans lequel le deuxième élément amortisseur (8) est reçu radialement dans le premier élément amortisseur (13) au moins dans la mesure où l'engagement fileté se trouve dans le premier élément amortisseur (13), de préférence le deuxième élément amortisseur (8) étant reçu complètement radialement dans le premier élément amortisseur (13) au moins dans une partie de ses positions possibles par rapport à son déplacement axial, et l'engagement fileté et le refoulement ainsi provoqué du milieu d'amortissement par le deuxième élément amortisseur (8) agissant de manière bidirectionnelle.

11. Amortisseur selon la revendication 9 ou 10, dans lequel le deuxième élément amortisseur (8) rétrécit ou ferme dans une région d'extrémité de son déplacement axial une ouverture de passage radiale (22, 25) pour le milieu d'amortissement par chevauchement avec l'ouverture de passage (22, 25) et assure ainsi un amortissement plus fort dans cette région d'extrémité.

12. Amortisseur selon la revendication 11, dans lequel le deuxième élément amortisseur (8) rétrécit ou ferme dans une autre région d'extrémité de son déplacement axial une autre ouverture de passage radiale (25, 22) pour le milieu d'amortissement par chevauchement avec l'autre ouverture de passage (25, 22) et assure ainsi un amortissement plus fort dans cette autre région d'extrémité.

13. Amortisseur selon la revendication 4 et la revendication 11, en option également la revendication 12, dans lequel l'au moins une ouverture de passage radiale (22, 25) est adjacente à la partie centrale (23) du trajet d'écoulement.

14. Utilisation d'une pluralité d'amortisseurs selon l'une quelconque des revendications précédentes, dans laquelle les amortisseurs de la pluralité sont remplis avec le même type de milieu d'amortissement, à des fins d'utilisation différentes en ce qui concerne les forces à amortir, en particulier pour des couvercles de toilettes (2) ou des sièges de toilettes (3) de différentes épaisseurs.

15. Garniture de toilettes comprenant un couvercle de toilettes (2) et/ou un siège de toilettes (3) pour le montage sur des toilettes (1) et comprenant au moins un amortisseur selon l'une quelconque des revendications 1 à 13.
